# EUROPEAN PATENT SPECIFICATION

(11) **EP 0 920 690 B1**
(45) Date of publication and mention of the grant of the patent: **03.04.2002**
(21) Application number: 97933758.1
(22) Date of filing: 28.07.1997
(51) Int. Cl.: G08G 1/04

(54) **VIDEO IMAGING**
VIDEOBILDERZEUGUNG
IMAGERIE VIDEO

(30) Priority: 22.08.1996 GB 9617592
(43) Date of publication of application: 09.06.1999
(73) Proprietor: Footfall Limited, Shirley, Solihull West Midlands B90 4LE (GB)
(72) Inventor: BARNES, Brian, Samuel, Solihull, West Midlands B90 4HN (GB)
(74) Representative: Watts, Peter Graham
(86) International application number: GB9702013
(87) International publication number: WO9808208

(56) References cited:
- EP-A- 0 465 375
- EP-A- 0 528 105
- EP-A- 0 671 706
- WO-A-82/01454
- WO-A-94/27408
- GB-A- 2 282 294
- US-A- 4 254 400
- US-A- 5 097 328
- US-A- 5 134 472
- US-A- 5 177 794

## Description

The present invention relates to video imaging systems and in particular to a method and apparatus for monitoring the flow of traffic through an area.

Video imaging systems have been proposed for monitoring the flow of pedestrians entering or leaving a pedestrian traffic area, for example the entrance to a retail outlet or shopping precinct. Such systems comprise a video imager, for example a CCD camera which is positioned above the area to provide a view of the traffic area, the images of the video imager being analyzed by suitable processing equipment, to count the number of pedestrians traversing the area and to detect the direction of movement of the pedestrians. In order to reduce the processing capacity required, it has been proposed in accordance with WO94/27408, to restrict processing of the video image to only a narrow band of the traffic area.

This system may be tailored to accommodate, for example, obstructions to the flow of traffic. However, once the system has been set up, it is inflexible and would require resetting, if the traffic area is altered by the introduction, removal or relocation of obstructions. Furthermore, such systems can only measure bidirectional flow of traffic. If such systems were to be used at an intersection, several systems would consequently be required, one at each entrance to the intersection, in order to monitor movement of the pedestrians through the intersection.

The present invention provides a video imaging system which is flexible and will permit the monitoring of omni-directional traffic flow.

The invention is as set out in independent claims 1 and 17. In accordance with one aspect of the present invention a method of monitoring the flow of traffic through an area is characterised by; producing a video image of the area; dividing the video image into a matrix of pixels; sampling the pixels of the whole video image at low resolution to detect an object of interest; and sampling the pixels of a local area of the video image centred on said object of interest, at high resolution.

In accordance with a further aspect of the present invention, a video imaging system comprises a video imager for producing a video image of an area and processing means for analyzing the video image, said processing means including; means for dividing the video image into a number of pixels; means for sampling pixels at low resolution to detect an object of interest; and means for sampling the pixels of a localised area centred on said object of interest, at high resolution.

In accordance with the present invention, the whole of the video image is scanned at low resolution, say one in every twenty pixels in both directions, and only if an object of interest is located at low resolution, is a localised area corresponding to the detected object of interest scanned at higher resolution, thereby saving on the processing capacity required.

In this manner, when an object of interest is located, it may be tracked across the area covered by the video image, so that omni-directional flow of traffic across the area may be monitored. A single video imager may consequently, for example, be used to monitor flow of traffic at an intersection.

According to a preferred embodiment of the invention a series of time separated video images of the area are produced, the pixels of one video image being compared with the corresponding pixels of a preceding video image or images, so that an object of interest moving across the area may be detected by a change in the pixel.

Furthermore, the local area scanned at high resolution may be sized to the object of interest, so as to provide discrimination between different objects of interest. For example, the local area scanned at high resolution will differ depending on whether the object of interest is a child, adult or pedestrian pushing a trolley or a family group. The sizing of the local area scanned at high resolution, will also allow for discrimination between individual pedestrians and closely grouped pedestrians. Corrections may furthermore be made to the sized areas to accommodate variations due, for example, to perspective or fish-eye lens effects. Alternatively the changing shape of an object from frame to frame may be used to identify the object. For example, for a pedestrian the stride pattern may be used to distinguish between an adult and a child, while inanimate objects such as trollies will produce a regular pattern.

By continuously scanning the whole traffic area, albeit at low resolution, the system will automatically accommodate changes in traffic flow paths when, for example, obstacles are introduced or relocated in the traffic area.

The invention is now described, by way of example only, with reference to the accompanying drawings, in which:-
Figure 1 illustrates diagrammatically, a video imaging system for monitoring the flow of pedestrians through a traffic area, in accordance with the present invention;
Figure 2 is a diagrammatic illustration showing the processing of the video image obtained by the system illustrated in Figure 1;
Figure 3 illustrates diagrammatically a video imaging system similar to that illustrated in Figure 1, installed at a pedestrian intersection;
Figure 4 illustrates diagrammatically an alternative application of the video imaging system in accordance with the present invention; and
Figure 5 illustrates diagrammatically a further embodiment of the present invention.

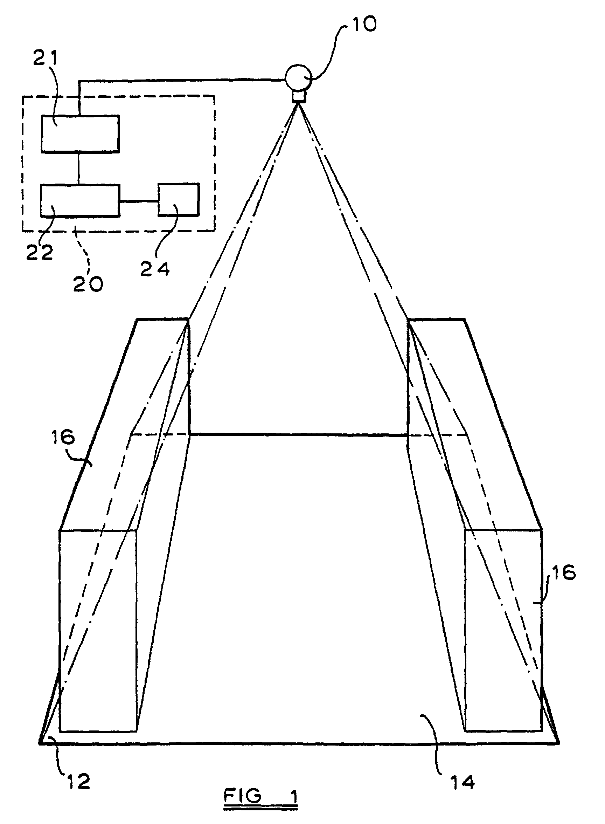

As illustrated in Figure 1, a video imaging system for monitoring the flow of customers in, for example supermarkets, comprises a monochrome or colour CCD camera 10 which is mounted over an isle 14 of the supermarket. Cabinets 16 are located on either side of the isle 14. The camera 10 is mounted to look vertically down on the area 12 which may, for example, be 10 metres square.

The camera 10 is connected to a remote processing means 20 which comprises an analogue to digital converter 21 which converts the analogue signal from the camera 10 into a digital signal representing the video image. The video image is divided into pixels, each representing a tiny dot on the video image. The digital signal includes a digital value corresponding to the shade of grey (for monochrome) or colour of each pixel. The video image of the area 12 comprises a matrix 512 x 512 pixels. The camera 10 produces a new video image of the area 12 at a rate of 25 frames per second.

The digital signals of each frame of the video image are passed to memory and analyzing means 22, which scans every twentieth pixel 23 of the matrix in each direction and compares the digital value corresponding to the shade of grey or colour of each pixel 23 with that of the same pixel in the preceding frame. Alternatively the digital value of each pixel may be compared with a weighted average of the digital value of that pixel during an arbitrarily long period of say 255 frames. If there is a variation in the shade of grey or colour which is in excess of a threshold value, then a potential object of interest, that is a moving object, is detected. The threshold may vary at different light intensities and the ability to differentiate changes at high and low intensities may change. Threshold maps may be used to control the threshold for different areas of the image.

In order to avoid the false detection of objects of interest due to local fluctuations in light, upon detection of a potential object of interest, pixels adjacent to the pixel 23 indicating a potential object of interest are scanned and only if there is a change in the shade of grey or colour above the threshold value, of at least one of these adjacent pixels, is the object of interest confirmed. Furthermore, in order to avoid the false detection of object of interest due to variations in light over the area 12 as a whole, the variation in shade of grey or colour of the pixel 23 identifying the potential object of interest, is compared with variations of pixels 23 in other parts of the area 12 which include, for example, pixels 23 in parts of the area 12 in which the display cabinets 16 are located and cannot possibly include objects of interest.

Upon confirmation of an object of interest, the analyzing means then scans all the pixels in a local area 25 which is centred on the pixel 23 identifying the object of interest. The local area 25 may initially be of a nominal size corresponding to a typical adult pedestrian. The size of the local area 25 may however be increased or reduced until the local area 25 is sized to the object of interest. The local area 25 is also moved until it covers the object of interest. That is, the local area 25 is adjusted until it covers all adjoining pixels in which there has been a change in the shade of grey or colour above the threshold value.

The object of interest may be identified by the size of the local area 25 which is eventually found to be required to cover the object of interest. The size and shape of the object of interest will change as the pedestrian moves and, for example, his arms and legs move relative to his body. Such variations may however be taken into account when identifying the object of interest by, for example, averaging the size over several frames of the video image. The processing means 20 is provided with memory means 24 in which look up tables are stored by which objects of interest in different size ranges would be identified as, for example, children, adults, adults pushing pushchairs or supermarket trolleys or closely grouped pedestrians. In the latter case, the overall size of the group may be used to provide a number in the group. The threshold value will discriminate between solid objects and shadows in the video image, thus avoiding false identification of the objects of interest. Where however intense shadows are formed by an intense light source, the threshold value may not be sufficient to discriminate between the solid object and shadow. The system may however be programmed with the position of such light sources, so that the location of a shadow may be predicted and discounted.

The local area 25 moves with the object of interest as it traverses the area 12 and thus the direction of movement of the object of interest may be monitored.

With the system disclosed above, if an object of interest comes to rest in the area 12 it will merge into the background. In such cases, it is necessary to maintain a record of the position of the object of interest and where it came from, so that when the object begins to move again, its path across the area 12 may be detected. One method of achieving this is that once a pixel detects an object of interest, the digital value against which the digital value of the pixel is compared is frozen until the object of interest moves away from that pixel. This protection of stationary objects of interest will preferably be of limited duration so that new obstructions permanently introduced into the area 12 will eventually be permitted to blend into the background.

The system disclosed above may consequently be used to monitor the number, type and direction of shoppers moving along the aisle 14. Furthermore, as the system covers the whole of the area 12, if the display cabinets 16 are moved so that customers may walk along the areas hitherto covered by the cabinets 16 and/or further display means are provided in the centre of the aisle 14, the system will automatically adapt to the new flow paths of the customers, without having to be reset.

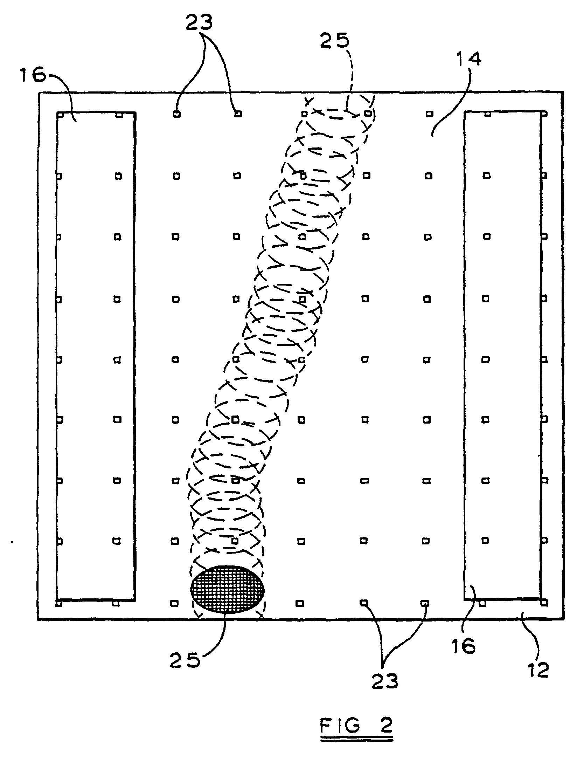

In the embodiment disclosed above, the video image a frame of which is illustrated in Figure 2 which typically represents an area 12, m x 10m, is divided into a matrix of 512 pixels x 512 pixels. Each pixel will consequently cover an area of about 2cm square. At course resolution when every twentieth pixel 23, in each direction, is scanned, the separation between the scanned pixels 23 will be about 40cms. This compares to an average width of a pedestrian of about 60cms. Scanning at course resolution should consequently detect any pedestrians entering the area 12. However, the resolution at which the course scanning is carried out may be increased or decreased as required, depending on the area 12 that is covered by the video image, the relative size of the objects of interest and the number of pixels into which the image is divided. Scanning at course resolution will however preferably involve scanning between 5% and 10% of the pixels evenly over the whole area of the video image.

Furthermore, in accordance with the above embodiment, pedestrians may move across the area 12 at speeds up to about 3m/sec. Assuming that a typical pedestrian is about 30cm from front to back, each pixel traversed by the pedestrian would cover the pedestrian for about 0.1 seconds, that is at least two frames at a rate of 25 frames/second. Moreover, the pedestrian will progress across the area 12 by up to about 6 pixels per frame. The direction and path of movement of the pedestrian across the area 12 may consequently be tracked frame by frame.

In order to achieve real time processing of the video image, it is necessary to detect, confirm, size and position an object of interest between successive frames. Once an object of interest has been detected, sized and positioned, the size and position in one frame may be used to predict the size and position in the next frame, thereby reducing the amount of processing required in subsequent frames, to track movement of the object of interest across the area 12.

The analyzer 22 is capable of scanning a plurality of local areas 25 at the same time, so that a plurality of objects of interest transversing area 12 may be tracked simultaneously.

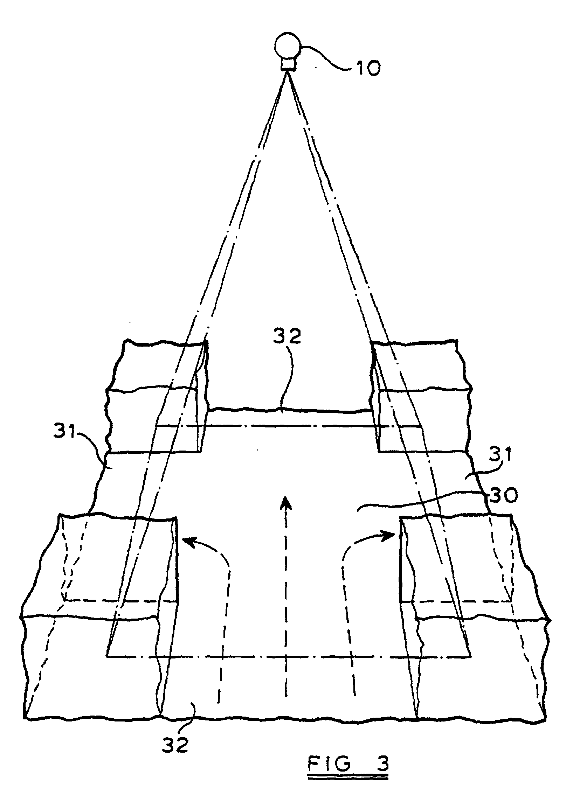

As illustrated in Figure 3, a video imaging system of the type described above may be used at an intersection 30 where two pedestrian thoroughfares 31, 32 intersect. With this system, as movement of the pedestrians is monitored over the whole of the intersection 30, the system is capable of monitoring pedestrians turning right or left as well as going straight across the intersection 30.

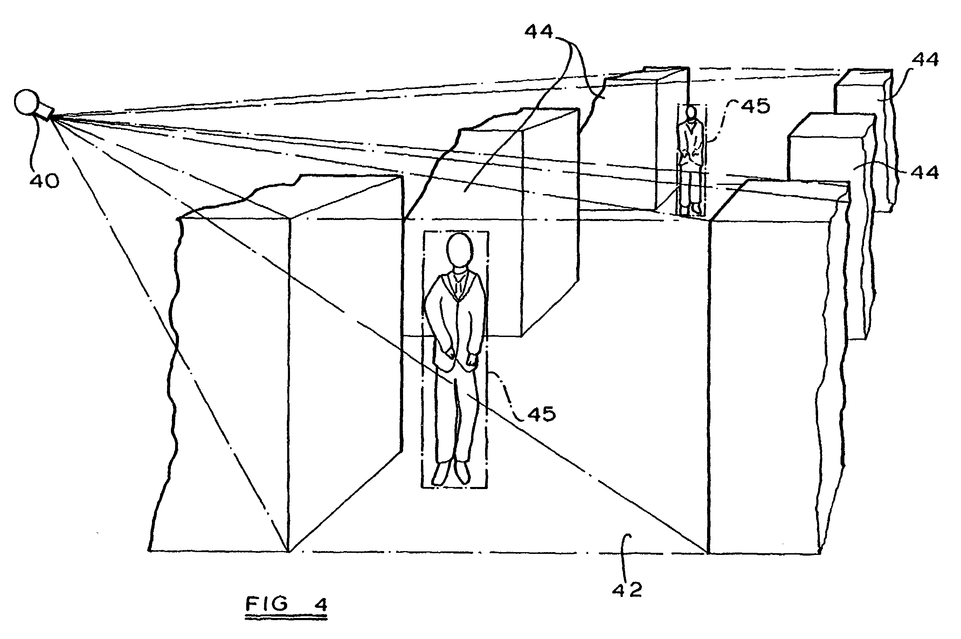

In the embodiment illustrated in Figure 4, the camera 40 is positioned so that it looks horizontally and downwardly along the main aisle 42 of a supermarket. The system can thus monitor pedestrians moving along the main aisle 42 and also turning off the main aisle 42 into one of several aisles 44 leading from the main aisle 42. In this embodiment, in order to accommodate perspective effects, the local areas 45 which are scanned at high resolution after an object of interest has been identified at low resolution, may be scaled.

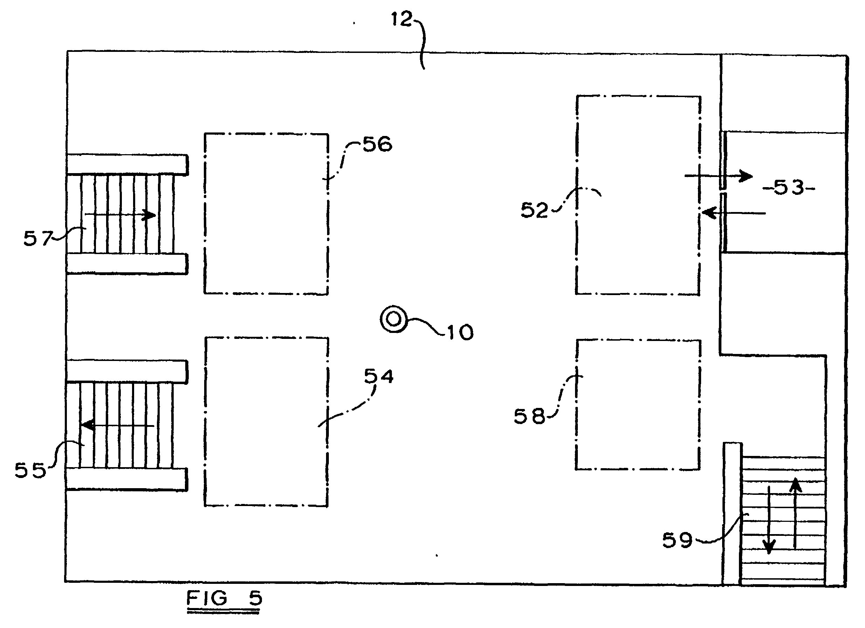

The embodiment illustrated in Figure 5 is similar to the system illustrated in Figure 1 and the same reference numerals are used for corresponding components. In the embodiment illustrated in Figure 5, the overall area 12 covered by the camera 10 is divided into several areas of interest, a first area of interest 52 corresponding to the entrance/exit from a lift 53; a second area of interest 54 corresponding to the entrance to an up escalator 55; a third area of interest 56 corresponding to the exit from a down escalator 57; and a fourth area of interest 58 corresponding to the entrance/exit from stairs 59.

The processing unit 20 is capable of processing each of the areas of interest 52, 54, 56 and 58 independently, so that separate counts can be obtained for pedestrians entering or exiting the lift 53, going up escalator 55, coming down escalator 57 and going up or down the stairs 59.

The areas of interest 52, 54, 56 and 58 are defined by the software of the system and may be set by the operator upon installation of the system. The areas of interest may furthermore be reset to accommodate changes in the physical layout of the area 12, without changing the hardware of the video imaging system. Alternatively, the overall area 12 covered by the camera 10 may be divided into areas of interest corresponding to, for example, different counters or display cabinets, so that movement of customers from one counter or display cabinet to another may be monitored.

While in the above embodiments the camera 10 produces a new video image at a rate of 25 frames per second and the images are divided into a matrix of 512 x 512 pixels, the camera 10 may alternatively produce images at from 15 to 60 frames per second and the images may be divided into matrices of from 80 x 80 to 4000 x 4000 pixels.

An additional video imager may be used to provide a stereoscopic image which would allow depth perception. This would assist in the identification of objects of interest and would also provide the capacity to see around objects which may be obscuring other objects of interest.

## Claims

1. A method of monitoring the flow of traffic through an area (12) including producing a video image of the area (12); dividing the video image into a matrix of pixels (23); and sampling the pixels (23) of the video image, **characterised in that** the pixels (23) of the whole video image are sampled at low resolution to detect an object of interest; and sampling the pixels of a local area (25, 45) of the video image centred on said object of interest, at high resolution.

2. A method according to Claim 1 **characterised in that** the pixels (23) of one video image of an area (12) are compared with the corresponding pixels (23) of a video image or video images of the area (12) taken at a different time, so that changes in the pixels will identify an object of interest moving across the area (12).

3. A method according to Claim 2 **characterised in that** video images are produced at a rate of 15 to 60 frames per second.

4. A method according to Claim 2 or 3 **characterised in that** the video image is converted to a digital video image signal in which the video image is divided into a matrix of pixels (23), the digital video image signal containing a digital value for the shade of grey or colour of each pixel (23) in the matrix.

5. A method according to Claim 4 **characterised in that** the shade of grey or colour of each pixel (23) of one video image is compared with the shade of grey or colour of the corresponding pixel (23) in a preceding video image and if the shade of grey or colour differs by more that a threshold value, an object of interest is identified.

6. A method according to Claim 4 **characterised in that** the shade of grey or colour of each pixel (23) of one video image is compared to a weighted average of the shade of grey or colour of that pixel (23) during an arbitrarily long period, and if the shade of grey or colour differs by more than a threshold value, an object of interest is identified.

7. A method according to Claim 5 or 6 **characterised in that** changes in each pixel (23) are compared with changes in other pixels (23) over the area (12) as a whole, so that corrections may be made for changes in light over the area (12) as a whole.

8. A method according to any one of the preceding claims **characterised in that** detection of an object of interest at low resolution is confirmed by scanning pixels (23) adjacent to the pixel (23) at which an object of interest is detected, prior to the scanning of a local area (25) centred on the object of interest.

9. A method according to any one of the preceding claims **characterised in that** at low resolution, between 5% and 10% of the pixels (23) are scanned evenly over the whole of the video image.

10. A method according to any one of the preceding claims **characterised in that** the local area (25) is sized to the object of interest.

11. A method according to Claim 10 **characterised in that** after locating an object of interest by scanning at low resolution, a local area (25) of nominal size is centred on the object of interest and the local area (25) is scanned at high resolution, the local area (25) being gradually sized to the object of interest over several high resolution scans.

12. A method according to Claim 10 or 11 **characterised in that** the object of interest is identified from the size of the local area (25).

13. A method according to Claim 10 or 11 **characterised in that** the object of interest is identified by variations in its shape from frame to frame.

14. A method according to any one of the preceding claims **characterised in that** each video image is divided into a matrix of from 80 x 80 to 4000 x 4000 pixels (23).

15. A method according to any one of the preceding claims **characterised in that** the video image is divided into a plurality of areas of interest (52, 54, 56, 58), each area of interest (52, 54, 56, 58) being scannable independently.

16. A method according to Claim 15 **characterised in that** a series of time separated video images are produced, the video images being processed to detect the rate of flow and direction of movement of objects of interest, through each area of interest (52, 54, 56, 58).

17. A video imaging system including a video imager (10; 40) for producing a video image of an area (12; 30; 42) and processing means for analyzing the video image, said processing means (20) including means (21) for dividing the video image into a number of pixels (23), **characterised in that** said processing means (20) further includes means (22) for sampling pixels (23) at low resolution to detect an object of interest; and means for sampling the pixels (23) of a localised area (25, 45), centred on said object of interest, at high resolution.

18. A video imaging system according to Claim 17 **characterised in that** the video imager (10; 40) is a monochrome or colour camera.

19. A video imaging system according to Claim 17 or 18 **characterised in that** the video imager (10; 40) is disposed vertically, horizontally or in between the vertical and horizontal relative to the area (12; 30; 42).

20. A video imaging system according to any one of Claims 17 to 19 **characterised in that** an additional video imager is provided to give a stereoscopic image of the area (42).

## Patentansprüche

1. Verfahren zum Überwachen des Verkehrsflusses durch ein Gebiet (12) mit dem Erzeugen eines Videobilds von dem Gebiet (12), dem Unterteilen des Videobilds in eine Matrix von Pixeln (23) und dem Abtasten der Pixel (23) von dem Videobild, **dadurch gekennzeichnet, daß** die Pixel (23) von dem gesamten Videobild bei einer niedrigen Auflösung abgetastet werden, um ein Objekt von Interesse zu erfassen, und die Pixel eines lokalen Bereiches (25, 45) von dem Videobild, der um das Objekt von Interesse zentriert ist, mit einer hohen Auflösung abgetastet werden.

2. Verfahren nach Anspruch 1, **dadurch gekennzeichnet, daß** die Pixel (23) von einem Videobild von einem Gebiet (12) mit den entsprechenden Pixeln (23) von einem Videobild oder Videobildern von dem Bereich (12) verglichen werden, die zu einer anderen Zeit aufgenommen wurden, so daß Änderungen in den Pixeln ein Objekt von Interesse kennzeichnen werden, das sich durch das Gebiet (12) bewegt.

3. Verfahren nach Anspruch 2, **dadurch gekennzeichnet, daß** Videobilder mit einer Rate von 15 bis 60 Einzelbildern pro Sekunde erzeugt werden.

4. Verfahren nach Anspruch 2 oder 3, **dadurch gekennzeichnet, daß** das Videobild in ein digitales Videobildsignal konvertiert wird, wobei das Videobild in eine Matrix von Pixeln (23) unterteilt wird, wobei das digitale Videosignal einen Digitalwert für den Grau- oder Farbton von jedem Pixel (23) in der Matrix enthält.

5. Verfahren nach Anspruch 4, **dadurch gekennzeichnet, daß** der Grau- oder Farbton von jedem Pixel (23) von einem Videobild mit dem Grau- oder Farbton in dem entsprechenden Pixel (23) in einem vorhergehenden Videobild verglichen wird, und daß, wenn der Grau- oder Farbton um mehr als einen Schwellwert abweicht, ein Objekt von Interesse identifiziert wird.

6. Verfahren nach Anspruch 4, **dadurch gekennzeichnet, daß** der Grau- oder Farbton von jedem Pixel (23) von einem Videobild mit einem gewichteten Mittel von dem Grau- oder Farbton von diesem Pixel (23) über eine beliebig lange Zeitdauer verglichen wird, und daß, wenn der Grau- oder Farbton um mehr als einen Schwellwert abweicht, ein Objekt von Interesse identifiziert wird.

7. Verfahren nach Anspruch 5 oder 6, **dadurch gekennzeichnet, daß** Änderungen in jedem Pixel (23) mit Änderungen in anderen Pixeln (23) über das Gebiet (12) als Ganzes verglichen werden, so daß Korrekturen für Änderungen in dem Licht über das Gebiet (12) als Ganzes gemacht werden können.

8. Verfahren nach einem der vorhergehenden Ansprüche, **dadurch gekennzeichnet, daß** die Erfassung von einem Objekt von Interesse bei einer niedrigen Auflösung vor dem Abtasten eines lokalen Bereiches (25), der um das Objekt von Interesse zentriert ist, durch Abtasten von Pixeln (23) bestätigt wird, die den Pixeln (23) benachbart sind, in denen ein Objekt von Interesse erfaßt wird.

9. Verfahren nach einem der vorhergehenden Ansprüche, **dadurch gekennzeichnet, daß** bei niedriger Auflösung zwischen 5% und 10% der Pixel (23) gleichmäßig über das gesamte Videobild abgetastet werden.

10. Verfahren nach einem der vorhergehenden Ansprüche, **dadurch gekennzeichnet, daß** der lokale Bereich (25) in der Größe auf das Objekt von Interesse eingestellt wird.

11. Verfahren nach Anspruch 10, **dadurch gekennzeichnet, daß** nach dem Lokalisieren eines Objekts von Interesse durch Abtasten bei niedriger Auflösung ein lokaler Bereich (25) einer Nenngröße um das Objekt von Interesse zentriert wird, und der lokale Bereich (25) bei hoher Auflösung abgetastet wird, wobei der lokale Bereich (25) allmählich auf das Objekt von Interesse über einige Abtastungen mit hoher Auflösung in der Größe eingestellt wird.

12. Verfahren nach Anspruch 10 oder 11, **dadurch gekennzeichnet, daß** das Objekt von Interesse durch die Größe von dem lokalen Bereich (25) **gekennzeichnet** wird.

13. Verfahren nach Anspruch 10 oder 11, **dadurch gekennzeichnet, daß** das Objekt von Interesse durch Veränderungen in der Form von Einzelbild zu Einzelbild **gekennzeichnet** wird.

14. Verfahren nach einem der vorherigen Ansprüche, **dadurch gekennzeichnet, daß** jedes Videobild in eine Matrix von 80 x 80 bis 4000 x 4000 Pixel (23) unterteilt wird.

15. Verfahren nach einem der vorherigen Ansprüche, **dadurch gekennzeichnet, daß** das Videobild in eine Vielzahl von Gebieten von Interesse (52, 54, 56, 58) unterteilt wird, wobei jedes Gebiet von Interesse (52, 54, 56, 58) unabhängig voneinander abtastbar ist.

16. Verfahren nach Anspruch 15, **dadurch gekennzeichnet, daß** eine Reihe von in der Zeit getrennten Videobildern erzeugt werden, wobei die Videobilder verarbeitet werden, um die Strömungsrate und Bewegungsrichtung von Objekten von Interesse durch jedes Gebiet von Interesse (52, 54, 56, 58) zu erfassen.

17. Videobilderzeugungssystem mit einem Videobilderzeuger (10; 40) zum Erzeugen eines Videobilds von einem Gebiet (12; 30; 42) und einer Verarbeitungsvorrichtung zum Analysieren des Videobilds, wobei die Verarbeitungsvorrichtung (20) eine Vorrichtung (21) zum Unterteilen des Videobilds in eine Anzahl von Pixeln (23) umfaßt, **dadurch gekennzeichnet, daß** die Verarbeitungsvorrichtung (20) des weiteren eine Vorrichtung (22) zum Abtasten von Pixeln (23) mit einer niedrigen Auflösung, um ein Objekt von Interesse zu erfassen, und eine Vorrichtung zum Abtasten der Pixel (23) von einem lokalisierten Bereich (25, 45) mit hoher Auflösung aufweist, das um das Objekt von Interesse zentriert ist.

18. Videobilderzeugungssystem nach Anspruch 17, **dadurch gekennzeichnet, daß** der Videobilderzeuger (10; 40) eine Monochrom- oder eine Farbkamera ist.

19. Videobilderzeugungssystem nach Anspruch 17 oder 18, **dadurch gekennzeichnet, daß** der Videobilderzeuger (10; 40) vertikal, horizontal oder zwischen der Vertikalen und der Horizontalen relativ zu dem Gebiet (12; 30; 42) angeordnet ist.

20. Videobilderzeugungssystem nach einem der Ansprüche 17 bis 19, **dadurch gekennzeichnet, daß** ein zusätzlicher Videobildverarbeiter zur Verfügung gestellt wird, damit sich ein stereoskopisches Bild von dem Gebiet (42) ergibt.

## Revendications

1. Procédé de surveillance de la circulation de trafic à travers une zone (12) comprenant la production d'une image vidéo de la zone (12), la division de l'image vidéo en une matrice de pixels (23), et l'échantillonnage des pixels (23) de l'image vidéo, **caractérisé en ce que** les pixels (23) de l'image vidéo globale sont échantillonnés à basse résolution afin de détecter un objet d'intérêt, et l'échantillonnage des pixels d'une zone locale (25, 45) sur l'image vidéo centrée sur ledit objet d'intérêt, à haute résolution.

2. Procédé selon la revendication 1 **caractérisé en ce que** les pixels (23) d'une image vidéo d'une zone (12) sont comparés aux pixels correspondant (23) d'une image vidéo ou d'images vidéo de la zone (12) prises à un instant différent de sorte que les variations des pixels identifieront un objet d'intérêt se déplaçant au travers de la zone (12).

3. Procédé selon la revendication 2 **caractérisé en ce que** les images vidéo sont produites à un débit de 15 à 60 trames par seconde.

4. Procédé selon la revendication 2 ou 2 **caractérisé en ce que** l'image vidéo est convertie en un signal d'image vidéo numérique dans lequel l'image vidéo est divisée en une matrice de pixels (23), le signal d'image vidéo numérique contenant une valeur numérique pour la nuance de gris ou de couleur de chaque pixel (23) dans la matrice.

5. Procédé selon la revendication 4 **caractérisé en ce que** la nuance de gris ou de couleur de chaque pixel (23) d'une image vidéo est comparée à la nuance de gris ou de couleur du pixel correspondant (23) dans une image vidéo précédente et si la nuance de gris ou de couleur diffère de plus d'une valeur de seuil, un objet d'intérêt est identifié.

6. Procédé selon la revendication 4 **caractérisé en ce que** la nuance de gris ou de couleur de chaque pixel (23) d'une image vidéo est comparée à une moyenne pondérée de la nuance de gris ou de couleur de ce pixel (23) durant une période arbitrairement longue, et si la nuance de gris ou de couleur diffère de plus d'une valeur de seuil, un objet d'intérêt est identifié.

7. Procédé selon la revendication 5 ou 6 **caractérisé en ce que** les variations de chaque pixel (23) sont comparées aux variations d'autres pixels (23) sur la zone (12) dans son ensemble, de sorte que des corrections peuvent être apportées pour des variations de lumière sur la zone (12) dans son ensemble.

8. Procédé selon l'une quelconque des revendications précédentes **caractérisé en ce que** la détection d'un objet d'intérêt à basse résolution est confirmée par le balayage de pixels (23) adjacents aux pixels (23) au niveau desquels un objet d'intérêt est détecté, avant le balayage d'une zone locale (25) centrée sur l'objet d'intérêt.

9. Procédé selon l'une quelconque des revendications précédentes **caractérisé en ce qu'**à basse résolution entre 5 % et 10 % des pixels (23) sont balayés de façon régulière sur la totalité de l'image vidéo.

10. Procédé selon l'une quelconque des revendications précédentes **caractérisé en ce que** la zone locale (25) est dimensionnée sur l'objet d'intérêt.

11. Procédé selon la revendication 10 **caractérisé en ce qu'**après la localisation d'un objet d'intérêt grâce à un balayage à basse résolution, une zone locale (25) de taille nominale est centrée sur l'objet d'intérêt et la zone locale (25) est balayée à haute résolution, la zone locale (25) étant dimensionnée progressivement sur l'objet d'intérêt sur plusieurs balayages à haute résolution.

12. Procédé selon la revendication 10 ou 11 **caractérisé en ce que** l'objet d'intérêt est identifié à partir de la taille de la zone locale (25).

13. Procédé selon la revendication 10 ou 11 **caractérisé en ce que** l'objet d'intérêt est identifié par des variations de sa forme d'une trame à l'autre.

14. Procédé selon l'une quelconque des revendications précédentes **caractérisé en ce que** chaque image vidéo est divisée en une matrice de 80 x 80 à 4000 x 4000 pixels (23).

15. Procédé selon l'une quelconque des revendications précédentes **caractérisé en ce que** l'image vidéo est divisée en une pluralité de zones d'intérêt (52, 54, 56, 58), chaque zone d'intérêt (52, 54, 56, 58) pouvant être balayée de façon indépendante.

16. Procédé selon la revendication 15 **caractérisé en ce qu'**une série d'images vidéo séparées dans le temps sont produites, les images vidéo étant traitées afin de détecter la vitesse de circulation et la direction de déplacement des objets d'intérêt, à travers chaque zone d'intérêt (52, 54, 56, 58).

17. Système de formation d'image vidéo comprenant un dispositif de formation d'image vidéo (12 ; 40) destiné à produire une image vidéo d'une zone (12 ; 30 ; 40) et un moyen de traitement destiné à analyser l'image vidéo, ledit moyen de traitement (20) comprenant un moyen (21) destiné à diviser l'image vidéo en un certain nombre de pixels (23), **caractérisé en ce que** ledit moyen de traitement (20) comprend en outre un moyen (22) destiné à échantillonner les pixels (23) à basse résolution afin de détecter un objet d'intérêt, et un moyen destiné à échantillonner les pixels (23) d'une zone localisée (25, 45), centrée sur ledit objet d'intérêt, à haute résolution.

18. Système de formation d'image vidéo selon la revendication 17 **caractérisé en ce que** le dispositif de formation d'image vidéo (10 ; 40) est une caméra monochrome ou en couleur.

19. Système de formation d'image vidéo selon la revendication 17 ou 18 **caractérisé en ce que** le dispositif de formation d'image vidéo (10 ; 40) est disposé verticalement, horizontalement ou bien entre la verticale et l'horizontale par rapport à la zone (12 ; 30 ; 42).

20. Système de formation d'image vidéo selon l'une quelconque des revendications 17 à 19 **caractérisé en ce qu'**un dispositif de formation d'image vidéo supplémentaire est prévu afin de fournir une image stéréoscopique de la zone (42).
